(19) Europäisches Patentamt

European Patent Office

Office européen des brevets

(11) Veröffentlichungsnummer: **0 280 997**
**A2**

(12) # EUROPÄISCHE PATENTANMELDUNG

(21) Anmeldenummer: 88102633.0

(51) Int. Cl.⁴: **H04M 1/02**

(22) Anmeldetag: 23.02.88

(30) Priorität: 03.03.87 DE 3706820

(43) Veröffentlichungstag der Anmeldung:
07.09.88 Patentblatt 88/36

(84) Benannte Vertragsstaaten:
AT BE CH DE FR GB IT LI LU NL SE

(71) Anmelder: **Siemens Aktiengesellschaft Berlin und München**
**Wittelsbacherplatz 2**
**D-8000 München 2(DE)**

(72) Erfinder: **Nothnagel, Gerd, Ing. grad.**
**Geroltstrasse 36/V**
**D-8000 München 2(DE)**
Erfinder: **Skrypalle, Ulrich, Dipl.-Des. (FH)**
**Drachenseestrasse 19**
**D-8000 München 70(DE)**

(54) **Funksendeempfänger insbesondere Funktelefon.**

(57) Für ein bereits existierendes Kompakt-Funkgerät gemäß VPA 86 P 1659 wird ein Gehäuse vorgeschlagen, in das von unten her das eigentliche Funkgerät einschiebbar und verrastbar ist und an dessen getrenntem wandseitigen Teil oben in Längserstreckung horizontal die Hör-Sprechgarnitur angeordnet ist.

FIG 1

## Funksendeempfänger, insbesondere Funktelefon

Die Erfindung bezieht sich auf einen Funksendeempfänger, insbesondere Funktelefon, der sich in einem Gehäuse mit Traggurt befindet und als Kompakt-Gerät mit Bedieneinheit, Stromversorgung und Antenne, ausgebildet ist.

Es sind tragbare Funkgeräte bekannt, die mit eingebauter Batterie, unabhängig von einem Fahrzeug oder einem sonstigen Netz, betriebsfähig sind. Derartige Funkgeräte sind jedoch meist nicht universell verwendbar, d.h. zum Beispiel kann die Bedieneinheit für das als Funktelefon ausgebildete Gerät nicht ohne weiteres für andere Mobilfunkeinrichtungen benutzt werden.

Der Erfindung liegt die Aufgabe zugrunde, ein Kompaktfunkgerät zu schaffen, daß nicht nur einen praktischen äußeren Aufbau hat, sondern dessen einzelne Elemente für sich auch in einer anderen Einbauform verwendet werden können.

Bei einem Funksendeempfänger der eingangs erwähnten Art wird diese Aufgabe gemäß der Erfindung dadurch gelöst, daß das Gehäuse für das Funkgerät als flacher Koffer ausgebildet ist, der auf einer seiner Wandseiten (Rückseite) mit der größten Fläche zur steckbaren und verrastbaren Aufnahme eines eigentlichen Funkgerätes ausgebildet ist, dessen elektrischen Anschlüsse zu einer obenliegenden Mehrfachsteckverbindung und einer separaten Antennensteckverbindung zusammengefaßt und in eine Gegensteckverbindung im Gehäuse einsteckbar sind, und daß das Gehäuse längs der Schmalseiten in zwei Halbschalen aufgeteilt ist, in deren vorderer Halbschale oben und längs in ausgeformten Mulden die zugehörige Hör-Sprechgarnitur samt darin befindlicher Bedieneinheit aufgehängt ist.

Weitere vorteilhafte Ausbildungen des Erfindungsgegenstandes finden sich in den Unteransprüchen.

Nachstehend wird die Erfindung anhand eines in den Figuren dargestellten Ausführungsbeispiels samt ihren Vorteilen näher erläutert.

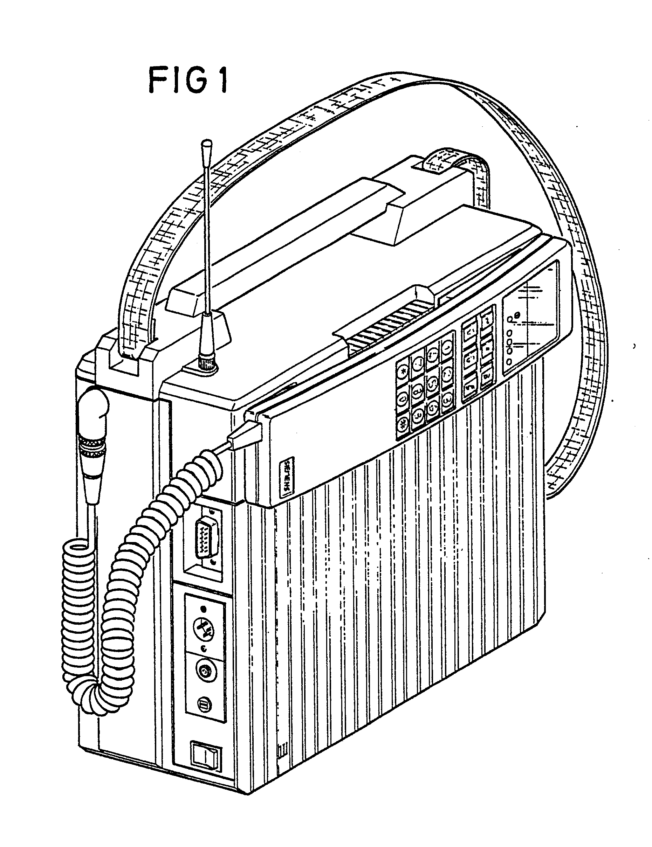

FIG 1 zeigt das Funkgerät im gebrauchsfertigen Zustand.

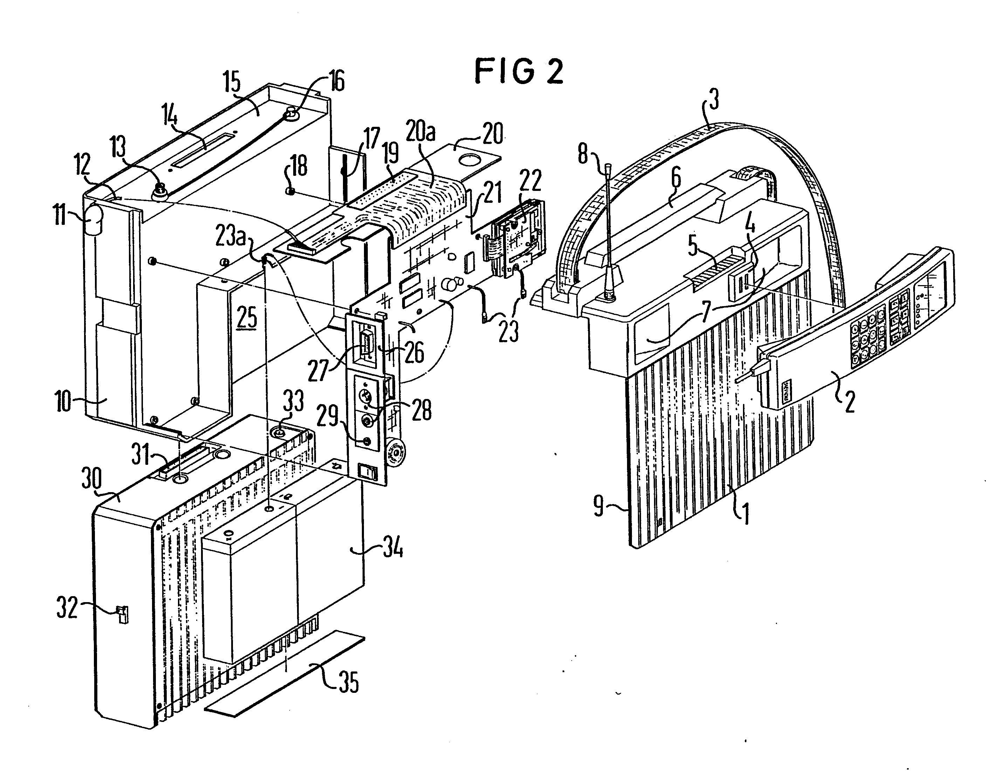

FIG 2 zeigt den inneren und äußeren Aufbau des Funkgerätes.

FIG 3 zeigt die Rückseite des Funkgerätes, in die das eigentliche Kompakt-Funkgerät einsteckbar ist.

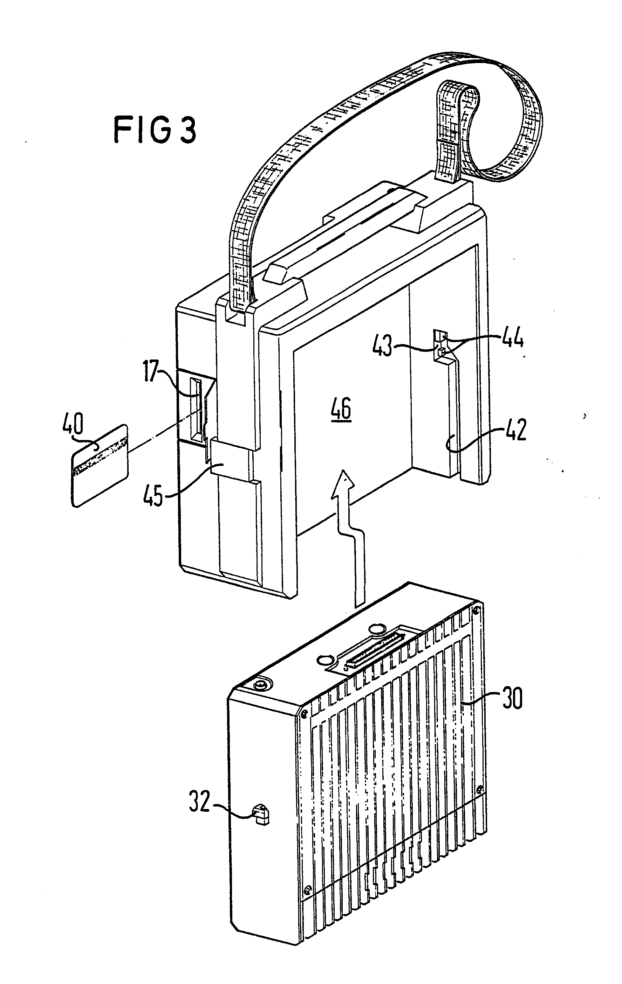

Das Gehäuse des Funkgerätes besteht im wesentlichen aus zwei Halbschalen 1 und 10, wovon die hintere Halbschale 10 die wesentlichen Teile, z.B. das Funkgerät 30 selbst, steckbar aufnehmen kann. Die Vorderseite des Gehäuses besteht aus einem im Querschnitt L-förmig gestalteten Teil, das vorne oben horizontal die Hör-Sprechgarnitur 2 in Mulden 7 aufnehmen kann. Zur Halterung dieser Hörsprechgarnitur ist sowohl eine Magnethalterung 4 vorgesehen, als auch für höhere Anforderungen durch Stöße und dergleichen eine nicht näher dargestellte mechanische Verriegelung, die mittels einer Sperrklinke 5 entriegelbar ist. Die obere Seite hat Aufhängevorrichtungen für einen Tragriemen 3 sowie einen Traggriff 6. Eine Antenne 8 ist aufsteck-und aufschraubbar. Die seitliche Begrenzung 9 ist als Spritzwasserschutzkragen ausgebildet. Die hintere Gehäuseschale hat rückseitig eine größere Aussparung 46, wie aus FIG 3 besser ersichtlich, in die ein Kompakt-Funkgerät 30 einsteckbar ist. Dieses Kompakt-Funkgerät hat oberseitig eine mehrpolige Steckerleiste 31 für den größten Teil der Signal- und Versorgungsleitungen sowie einen Antennenanschluß 33.

Im vorderen Teil der hinteren Gehäuseschale befindet sich eine Aussparung 25 zur Aufnahme eines Akkupacks 34, der von unten her in das Gehäuse einschiebbar und mittels eines schiebbaren und verrastbaren Deckels 35 abschließbar ist.

Die obere Fläche enthält einen mehrpoligen steck-und verschraubbaren Anschluß 11 für die Bedieneinheit 2. Die Bedieneinheit ist nicht nur, wie an sich bekannt, mit Hör-und Sprechmuscheln, sondern auch mit einer Wähl-und Bedientastatur versehen. Ferner ist dort eine Antennensteck-und Schraubbuchse 13 angeordnet sowie ein Ausschnitt 14 vorgesehen, in den die hervorragenden Stifte einer Anschlußsteckerleiste 19 für den Gegenanschluß 31 des Funkgerätes hineinragen können. In der Vertiefung 15 befindet sich ferner eine Verbindungsleitung zwischen der nach außen führenden Antennenbuchse 13 und der nach innen zum Kompakt-Funkgerät führenden Antennenanschlußbuchse 16.

Die beiden Gehäuseschalen sind miteinander durch nicht näher dargestellte Rasterungen verbindbar und/oder mittels Schraubbefestigungen 18. In das Innere der hinteren Gehäuseschale ist eine zweigeteilte im wesentlichen L-förmige Leiterplatte 20 und 21 einschiebbar. Diese beiden senkrecht zueinander stehenden Leiterplatten sind durch eine flexible Verbindungsleitung 20a elektrisch miteinander kontaktiert. Auf dieser flexiblen Folie 20a befinden sich sowohl die schon erwähnte Steckerleiste 19 für den Anschluß des Funkgerätes als auch eine Mehrfach-Verbindungsleitung 12 für die Buchse 11 der Hör-Sprechgarnitur. Der senkrechte Teil 21 der Leiterplatte enthält einen für die Bedienung des Gerätes erforderlichen Kartenleser 22, da derartige Funktelefone meist nur mit einer sogenannten Identifizierungskarte (40 in FIG 3) zugänglich sind. Im mittleren Teil dieser Platte 21 befinden sich elektronische Bauelemente 24 sowie Anschlüsse 23 als Steckverbinder für den Akupack 34. Anstelle dieser Flachstecker kann auch, wie angedeutet, eine automatische Batterie-Kontaktierung 23 a vorgesehen sein.

An einer Zusatzplatte 26, die mit der Leiterplatte 21 fest verbunden ist und einen Teil der seitlichen Abdeckung des Gehäuses bildet, können Prüfbuchsen 27, Batterieladeanschlüsse 28, Signalisierungen 29 und andere Zusatz-Bedienelemente angeordnet werden. Diese Platte 26 bildet einen Teil der Gehäuseseitenwand.

Die Identifizierungskarte 40 kann, wie in FIG 3 näher ersichtlich, in einen seitlichen Schlitz 17 der hinteren Gehäuseschale eingesteckt werden. Zum Staubschutz ist dieser Schlitz durch eine rastbare Klappe 41 verdeckt.

Die Aufnahme des eigentlichen Kompakt-Funkgeräts 30 in der Aussparung 46 kann über seitlich in der Gehäuseschale eingeformte Führungsnuten 42 erfolgen. In diese Führungsnuten greifen beidseits des Funkgerätes befindliche Nocken 32 ein. Im letzten Teil der Einschubphase erfolgt die Kontaktierung der oberseitigen Steckerleiste 31 und Antennenstecker 33, und die Nocken 32 gleiten in einen Schacht 43, der mit Anschlägen 44 ausgestattet ist. Zur Sicherung gegen Herausfallen oder unbeabsichtigte Entnahme sind außenseitig - schiebbare Verriegelungen 45 vorgesehen, die verhindern, daß die Nasen 32 aus dem Schacht 43 gleiten können.

Auf diese Weise ist ein kompakter Aufbau des gesamten Funkgerätes gegeben mit sehr praktischer Handhabung im tragbaren Betrieb. Das eigentliche Funkgerät läßt sich jederzeit unabhängig hiervon, z.B. in einer getrennten Autohalterung, verwenden, was auch für die Bedien-Hör-Sprechgarnitur gilt. Für das Gesamtgerät kann auch bei nachträglichem Einbau in ein Fahrzeug ein nicht näher dargestellter Halterahmen vorgesehen werden, in den das gesamte Gerät einsteckbar ist. Selbstverständlich kann dann die Bedieneinheit sowie die Antenne örtlich getrennt vorgesehen werden. Das gleiche gilt auch für die Stromversorgung.

## Ansprüche

1. Funksendeempfänger, insbesondere Funktelefon, der sich in einem Gehäuse mit Traggurt befindet und als Kompakt-Gerät mit Bedieneinheit, Stromversorgung und Antenne, ausgebildet ist, **dadurch gekennzeichnet,** daß das Gehäuse für das Funkgerät als flacher Koffer ausgebildet ist, der auf einer seiner Wandseiten (Rückseite) mit der größten Fläche zur steckbaren und verrastbaren Aufnahme eines eigentlichen Funkgerätes (30) ausgebildet ist, dessen elektrischen Anschlüsse zu einer obenliegenden Mehrfachsteckverbindung (31) und einer separaten Antennensteckverbindung (33) zusammengefaßt und in Gegensteckverbindung (14,16) im Gehäuse einsteckbar sind und daß das Gehäuse längs der Schmalseiten in zwei Halbschalen (1,10) aufgeteilt ist, in deren vorderer Halbschale (1) oben und längs in ausgeformten Mulden die zugehörige Hör-Sprechgarnitur (2) samt darin befindlicher Bedieneinheit aufgehängt ist.

2. Funksendeempfänger nach Anspruch 1, **dadurch gekennzeichnet,** daß zwischen den Mulden (7) eine Magnethalterung (4) für die Hör-Sprechgarnitur (2) vorgesehen ist und erforderlichenfalls eine mittels oben liegender Klinke (5) entrastbare mechanische Verriegelung.

3. Funksendeempfänger nach Anspruch 1, **dadurch gekennzeichnet,** daß in der rückseitigen Gehäuseschale (10) an einer der schmalen Seitenwände eine Aussparung für eine Platte (26) mit Prüfsteckverbinder (27), Ladestrombuchse (28) und Signalgeber (29) enthalten ist und auf der anderen Gehäuseschalseite ein durch eine Klappe abgedeckter Schlitz (17) für einen Kartenleser (22).

4. Funksendeempfänger nach Anspruch 3, **dadurch gekennzeichnet,** daß im Inneren des Gehäuses eine im wesentlichen zweiteilige rechtwinklig zueinander angeordnete Leiterplatte (20,21) ange ordnet ist, deren einer Teil (20) innerhalb der oberen Fläche der rückseitigen Gehäuseschale (10) verläuft und einen Mehrfachsteckverbinder (14) für den Anschluß des Funkgerätes (30) enthält und deren anderer Teil (21) senkrecht dazu über eine Folienleitung (20a) verbunden parallel zur und hinter der Frontplatte (1) angeordnet ist und einen Kartenleser (22) sowie die Leiterplatte (26) für die Prüfbuchsen trägt und sonstige Elektronikbauelemente (24), die zur Verbindung des Funkgerätes (30) mit der Bedieneinheit (2), der Batterie (34), sowie den Prüfbuchsen (27) und den Kartenleser (22) dienen.

5. Funksendeempfänger nach einem der vorhergehenden Ansprüche, **dadurch gekennzeichnet,** daß die rückseitige Gehäuseschale (10) vorderhalb des Funkgerätes einen Schacht (25) zum Einstecken einer Batterie (34) enthält.

6. Funksendeempfänger nach einem der vorhergehenden Ansprüche, **dadurch gekennzeichnet,** daß an die vordere im Querschnitt etwa L-förmig gestaltete Gehäuseschale oben ein Griff (6) samt Befestigungselementen für den Tragriemen (3) angeformt ist.

7. Funksendeempfänger nach einem der vorhergehenden Ansprüche,
**dadurch gekennzeichnet,**
daß im Schacht (46) für die Aufnahme des Funkgerätes seitlich Führungen für seitlich am Funkgerät angebrachte Nasen (41) vorgesehen sind, die nach Einrasten des Funkgerätes durch Riegelverrastungen (45) absperrbar sind.

# FIG 1

# FIG 2

0 280 997

# FIG 3